# EUROPÄISCHE PATENTSCHRIFT

(11) **EP 0 927 997 B1**
(45) Veröffentlichungstag und Bekanntmachung des Hinweises auf die Patenterteilung: **25.09.2002**
(21) Anmeldenummer: 98124793.5
(22) Anmeldetag: 29.12.1998
(51) Int. Cl.: G11B 17/22, G11B 23/00, G11B 33/04

(54) **Vorrichtung zum Magazinieren und Transportieren von gleichgrossen und stapelförmig angeordneten scheibenförmigen Elementen**
Device for storing and transporting stacked disc-shaped elements of uniform size
Dispositif de magazinage et de transport d'objects empilés en forme de disques de mêmes dimensions

(30) Priorität: 02.01.1998 DE 19800051
(43) Veröffentlichungstag der Anmeldung: 07.07.1999
(73) Patentinhaber: Hoffmann, Alexander, 69231 Rauenberg (DE)
(72) Erfinder: Hoffmann, Alexander, 69231 Rauenberg (DE)
(74) Vertreter: Muschka, Wilhelm, Dipl.-Ing.

(56) Entgegenhaltungen:
- DE-A- 3 514 580
- DE-C- 4 223 813
- GB-A- 2 103 169
- US-A- 1 350 794
- PATENT ABSTRACTS OF JAPAN vol. 018, no. 429 (P-1785), 10. August 1994 (1994-08-10) -& JP 06 131793 A (CLARION CO LTD), 13. Mai 1994 (1994-05-13)

## Beschreibung

Die Erfindung betrifft eine Vorrichtung zum Magazinieren und Transportieren von gleichgroßen und stapelförmig angeordneten scheibenförmigen Elementen nach dem Oberbegriff des Anspruchs 1.

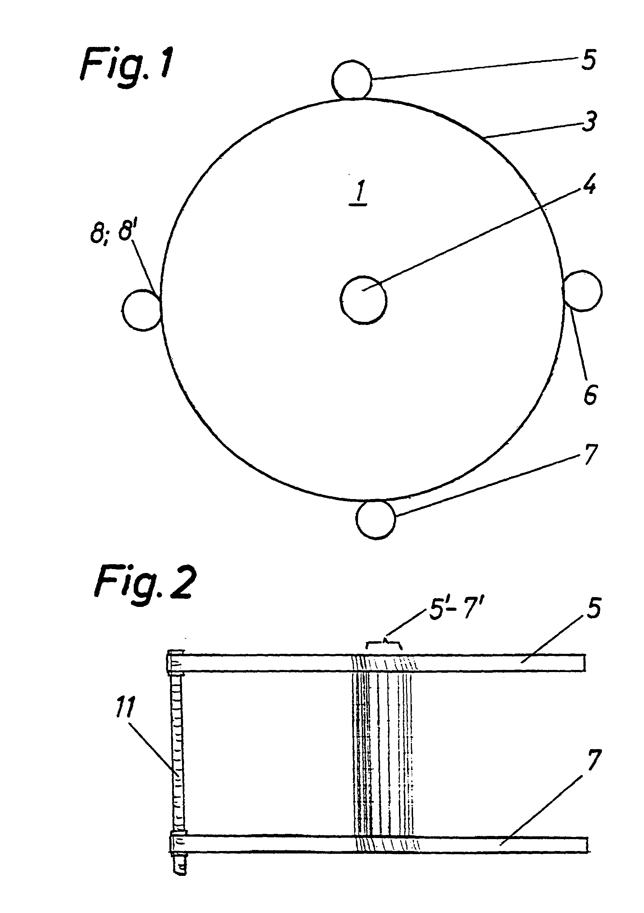

Eine Vorrichtung dieser Gattung enthält die DE 42 23 813 C1. Sie arbeitet mit zwei zueinander parallelen Plattenstapeln bzw. Magazinen, deren Spindeln gleichförmige Gewinde aufweisen, wie vor allem Fig. 1, Position 10 zu entnehmen ist. Dies erschwert die Entnahme eines der scheibenförmigen Elemente aus dem einen Magazin, die hier jeweils an dessen Ende erfolgt, sowie die anschließende Einbringung in das andere Magazin. Die Erschwernis erhöht sich noch durch den nichtlinearen Bewegungsablauf bei der Elementenentnahme und anschließenden -einbringung. Die beiden Stapel werden nämlich um eine Position weitergeschoben, der spendende Stapel nach vorn, der aufnehmende nach hinten; der nächste Wechsel erfolgt, sobald das folgende Element an vorderster Position zu liegen kommt, und zwar so lange bis das gesuchte Element vorn ist und ganz entnommen werden kann. Unerwünschte Folgen ergeben sich in der Praxis oft dadurch, daß die bekannte Vorrichtung für die Packungsdichten und Fertigungstoleranzen der Elemente nicht optimal ausgelegt werden kann. Darüber hinaus werden Gewindespindeln mit unterschiedlichem Drehsinn verwendet, was beim Herstellungsaufwand zu Buche schlägt.

Patent Abstracts of Japan vol. 018, no. 429 (P-1785), 10. August 1994 & JP 06131793 A (CLARION CO LTD), 13 Mai 1994 beinhaltet eine Aufzeichnungsvorrichtung, die über zwei Rotationsachsen einen Scheiben-Fördermechanismus bewegt. Die Rotationsachsen enthalten in ihrem Mittenbereich eine - gegenüber dem Ein- und Auslaufbereich - erhöhte Gewindesteigung. Diese Aufzeichnungsträger sind in einzelnen Kassetten 6a-6d ("tays") untergebracht und bilden mit diesen zusammen die zu verschiebende Einheit 50. Mit einer solchen Verschiebe-Bewegung gelangt der - zum Abspielen - benötigte Aufzeichnungsträger auf die Höhe-des Auslesearms. Anders ausgedrückt wird ein ganzer Stapel von Aufzeichnungsträgern entlang eines feststehenden Auslesearms bewegt, um schließlich mit diesem die gewünschte Scheibe auszulesen.

In der Praxis werden die Kassetten bzw. trays neuerdings als ein entbehrlicher Aufwand empfunden, weil damit das Nutzvolumen gegenüber der vorgeschlagenen Vorrichtung auf ca. ein Drittel oder noch weniger reduziert ist.

Aufgabe der Erfindung ist es, die konstruktive Ausbildung des (für ein- und mehrstapelige Ausführungsbeispiele der Erfindung) zentralen Bauelements, der Gewindespindel, den erwünschten Speicherkapazitäten und erforderlichen Bewegungsabläufen beim Füllen und Leeren der zugehörigen Magazine optimal anzupassen. Diese Aufgabe wird erfindungsgemäß durch den Kennzeichnungsteil des Patentanspruchs 1 gelöst. Die vorgeschlagene Tiefe und Breite der Gewindegänge bei den in der Regel 1,2 mm starken CDs verkraften eine Dickentoleranz von bis zu 30% und lassen eine Speicherkapazität von bis zu 300 Einheiten pro Magazin zu. Kommt noch eine kontinuierliche Erweiterung der Steigung im Zentralbereich (Einstapelausführung) bzw. in den Endbereichen (Zweistapelausführung) hinzu, so erleichtert dies das Füllen und Leeren der Magazine für die scheibenförmigen Elemente bzw. CDs.

Eine Weiterführung der Erfindung sieht bei der Zweistapelausführung die Ausbildung nach Patentanspruch 2 vor.

Die Herstellung der erfindungsgemäßen Vorrichtung wird sodann gegenüber dem bekannten Stand der Technik durch die Verwendung von jeweils einem Antrieb pro Stapel sowie unabhängigen Positionsfühlern realisiert, wie dies Gegenstand des Patentanspruchs 3 ist.

In vorstehendem Zusammenhang erweisen sich außerdem die konstruktiven Maßnahmen gemäß der Patentansprüche 4 und 5 als zweckmäßig. Dies ergibt sich aus den fertigungstechnischen Vorgaben bei den scheibenförmigen Elementen: Z.B. beträgt die zulässige Toleranz von Audio-CDs beim Außendurchmesser 120 mm ± 0,3mm und bei der Dicke 1,2 (+0,3/-0,1) mm. Gemäß dem erfindungsgemäßen Vorschlag werden die Gewindespindeln deshalb so ausgelegt, daß sie bei der Einstapelausführung im Zentralbereich und bei der Zweistapelausführung im Ein- und Auslaufbereich bei Audio-CDs und den mechanisch identischen Formen von CD-ROM oder DVD die Steigung 3mm +0,3 mm Toleranz und die Ganghöhe 1,5 mm ±0,2 mm Toleranz aufweisen.

Hohe Packungsdichten und hohe Toleranzen gegen Maßungenauigkeiten der scheibenförmigen Elemente lassen sich ganz gezielt für die unterschiedlichen Ausführungsformen der erfindungsgemäßen Vorrichtung bei einem Vorgehen nach Patentanspruch 6 erreichen.

Hervorzuheben gilt es auch noch die Manipulatoren nach den Patentansprüchen 8 und 12 insofern, weil ihre Arbeitsweise einen Transport der scheibenförmigen Elemente in der Elementenebene zuläßt.

Auch die restlichen Unteransprüche enthalten Weiterbildungen der Erfindung.

Im folgenden wird die Erfindung an Hand von zwei Ausführungsbeispielen näher erläutert, wobei die in den einzelnen Figuren einander entsprechenden Teile dieselben Bezugszeichen aufweisen. Es zeigt
- Fig. 1: die Draufsicht auf eine einstapelige Ausführungsform mit 4 symmetrisch um den Umfang verteilten Gewindespindeln bzw. 3 Gewindespindeln und 1 Haltestange,
- Fig. 2: die Seitenansicht (Aufriß) der Ausführungsform gemäß Fig.1,
- Fig. 3: den im wesentlichen aus Schlitten, Greiferarm und Fingermechanismus bestehenden Manipulator der einstapeligen Ausführungsform,
- Fig. 4: den Greiferarm gemäß Fig. 3 für sich herausgezeichnet, und zwar zusammen mit seinen vertikalen und horizontalen Antriebsmechanismen,
- Fig. 5: die Draufsicht auf eine zweistapelige Ausführungsform mit jeweils drei Gewindespindeln und einer Haltestange, die dergestalt symmetrisch um den Umfang verteilt sind, daß die beiden Haltestangen einander direkt gegenüberliegen,
- Fig. 6: eine der insgesamt sechs Spindeln der Ausführungsform gemäß Fig. 5,
- Fig. 7: den im wesentlichen aus Außenspannzange, keilförmigem Stempel und Zentrierglocke bestehenden Schlitten für die zweistapelige Ausführungsform,
- Fig. 8: den in Fig. 2 angedeuteten Mittenbereich einer Gewindespindel für die einstapelige Ausführungsform für sich herausgezeichnet und
- Fig. 9: die Gewindespindel von Fig. 8 mit einer in ihrem Mittenbereich inzwecks Entnahme eines Elements - teilbarer Ausbildung.

In Fig. 1 ist ein einziger Stapel 1 von gleichgroßen scheibenförmigen Elementen 3, z.B. mit einem Alu-Kern versehene sogenannte Wechselfestplatten, magnetooptische Platten, CDs oder dgl., in Draufsicht dargestellt. In ihrer Mitte haben diese Elemente ein gleichgroßes, kreisrundes Loch 4 und sind an ihrem Außenumfang in 90° Winkelabstand voneinander durch die drei Gewindespindeln 5, 6 und 7 begrenzt. Letztere sind zueinander parallel angeordnet und erstrecken sich über die gesamte Stapellänge. In der vierten 90°-Position ist eine in etwa hälftig teilbare Gewindespindel 8' angeordnet, deren eine Hälfte im Bedarfsfall zusammen mit den drei anderen Gewindespindeln 5 bis 7 über den aus Fig. 2 ersichtlichen Riemen 11 synchron angetrieben wird. Die andere Hälfte der Gewindespindel 8' dagegen wird im Vergleich hierzu asynchron betätigt. Die scheibenförmigen Elemente 3 reichen mit ihren Randbereichen in die Gewindegänge der Spindeln 5 bis 7 und 8', so daß der Stapel 1 beim Rotieren der Spindeln mitumläuft und sich entsprechend der Drehrichtung nach der einen oder anderen Seite hin verschiebt. Bei einem etwas modifizierten Ausführungsbeispiel kann anstelle der Gewindespindel 8' auch eine bloße Haltestange 8 vorgesehen sein. Sie wird entgegen der Spindelausführung nicht angetrieben und der "wandernde" Stapel schiebt sich an ihrer glatt ausgebildeten Oberfläche entlang (bzw. seine Elemente haben hier keine Möglichkeit - wie bei den Spindeln - in ein Gewinde einzugreifen).

Besondere Bedeutung kommt im anstehenden Zusammenhang der Ausbildung der Gewindespindel 5 bis 7 und 8' zu. Sie besitzen - auf die Gesamtlänge bezogen - mind. doppelt so viele Gewindegänge wie zum Magazinieren vorgesehene Elemente 3, genaugenommen 2N-1 an der Zahl, wenn mit N der einzelne Gewindegang bezeichnet wird. Wesentlich ist hierbei, daß im Mittenbereich 5' bis 7' der Spindeln 5 bis 7 die Steigung und die Ganghöhe - jeweils im Vergleich zu den links und rechts angrenzenden Bereichen - erweitert ausgebildet sind. Auf diese Weise erhalten die scheibenförmigen Elemente in dem Mittenbereich einen größeren gegenseitigen Abstand, z.B. bei CDs 3mm, so daß an dieser Stelle eine ungehinderte, sichere Entnahme möglich wird. Hierzu wird der Stapel 1 durch einen synchronen Drehantrieb aller Gewindespindeln 5 bis 7, einschließlich Haltestange 8, bewegt, wobei sich die magazinierten scheibenförmigen Elemente 3 längs der Achsrichtung des Stapels 1 so lange fortbewegen, bis sich das gewünschte Element genau an der zentralen Position befindet.

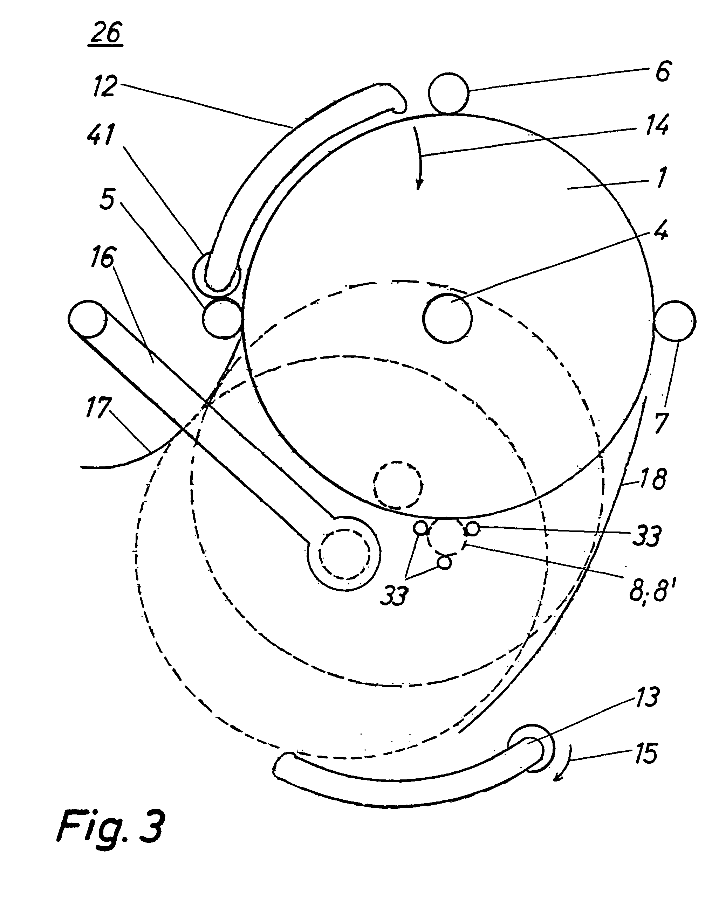

Die eigentliche Entnahme des scheibenförmigen Elements 3 erfolgt bei der einstapeligen Ausführungsform mittels des Manipulators 26 und ist in Fig. 3 dargestellt. Hierbei schwenkt ein erster Finger 12 von z.B. 2mm Breite im Uhrzeigersinn, angedeutet durch den Drehpfeil 14, in den Stapel 1 ein. Ein zweiter Finger 13 mit gegenläufigem Drehsinn, angedeutet durch den Drehpfeil 15, dient als Gegenlager. Der erste Finger 12 hat die gebogene Form von etwa 70% eines Viertelkreises des scheibenförmigen Elements, mindestens jedoch die Länge von dessen Radius. In seiner Ruhestellung ist dieser Finger in dem Freiraum zwischen zwei Gewindespindeln, z.B. den Spindeln 5 und 6, parallel zum Umfang des scheibenförmigen Elements 3 angeordnet. Er befördert das Element mittels eines ca. 90°-Schwenks so weit, daß das Mittelloch 4 über den Rand des Stapels 1 um mindestens zweimal die Länge seines Durchmessers hinausreicht. An dieser Stelle wird das Element von dem Greiferarm 16 erfaßt, der es nun völlig aus dem Stapelbereich hinausbefördert, und einem Laufwerk, im Fall einer CD einem Abspielgerät, zuführt. Bei diesem Entnahmevorgang gleitet das scheibenförmige Element beidseitig in den Führungsschienen 17 und 18, die an dem Stapel 1 bzw. seinem Magazin 1' befestigt sind.

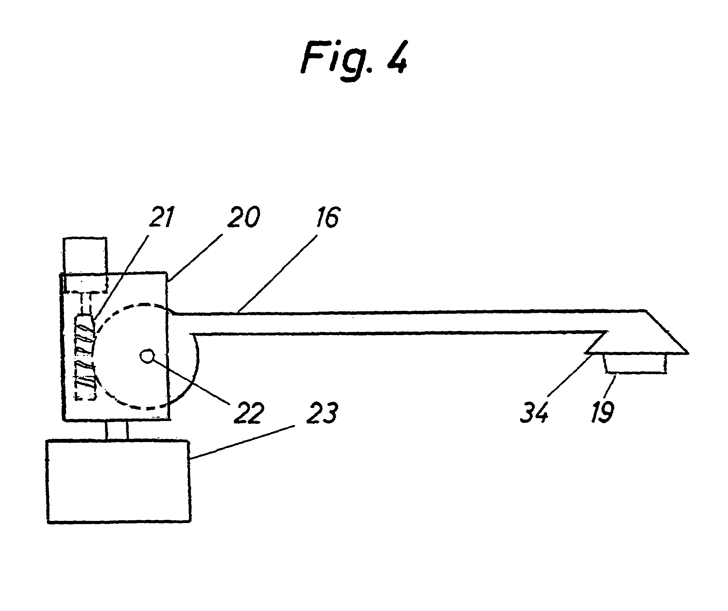

Der Greiferarm 16 und seine Funktion werden in Fig. 4 näher erläutert: An dem freien Ende dieses Arms sind federnde Finger 19 befestigt. Alternativ hierzu erfüllt bei einem anderen, zeichnerisch nicht näher ausgeführten Ausführungsbeispiel auch ein aufblasbarer Stempel denselben Zweck. Der Greiferarm 16 läßt sich mittels Hub- oder Kippantrieb 20 und dessen Ritzel 21 um die Achse 22 in einer zu dem scheibenförmigen Element 3 senkrechten Ebene verschwenken. Mittels einer solchen Hub- oder Kippbewegung werden die federnden Finger bzw. der aufblasbare Stempel bis zu dem definierten Anschlag 34 in das Mittelloch 4 (Fig. 1) eingetaucht. In dieser Stellung spreizen sich die federnden Finger bzw. der Stempel wird über einen beweglichen Schlauch aufgeblasen, so daß zwischen Greiferarm 16 und scheibenförmigem Element 3 eine kraftschlüssige Verbindung entsteht. In dieser durch das scheibenförmige Element definierten Ebene verschwenkt jetzt der Arm mit Hilfe des Drehantriebs 23 um mindestens 45°, aber typisch 90°. Diese Ebene ist in Fig. 4 die Blickebene. Um aber den Verschwenkweg freizugeben, muß zuvor die hälftig unterteilte Haltestange 8 betätigt werden (Fig. 3). Zu diesem Zweck ist die Haltestange an ihrer Trennstelle mit einem herkömmlichen und daher in der Zeichnung nicht näher ausgeführten Zentrierkonus versehen. Ein aus den gleichen Gründenzeichnerisch nicht dargestellter Hubmechanismus verschiebt daraufhin die eine Stangenhälfte in Richtung ihres Achsenverlaufs um ca. zweimal die Dicke des zu transportierenden scheibenförmigen Elements 3 und gibt dadurch den beabsichtigten und zuvor beschriebenen Verschwenkweg für besagtes Element frei. Der erste Finger 12 schiebt nun das selektierte Element aus dem Stapel heraus, woraufhin es von dem Greiferarm 16 erfaßt und - wie dargelegt - z.B. einem Laufwerk zugeführt wird. Dieser Wegverlauf ist in Fig. 3 mit unterbrochener Linienführung dargestellt.

Für den Fall, daß - wie weiter oben ausgeführt - anstelle der vierten 90°-Position - die in der Mitte halbierte Gewindespindel 8'zum Einsatz kommt, kann auch hier der Mittenbereich mit einem Zentrierkonus versehen sein. Ist das für die Entnahme ausgesuchte Element 3 in der Mittenposition der Gewindespindel angekommen, wird die eine Hälfte dieser Spindel 8' asynchron zu der anderen um ein bis zwei Umdrehungen derart verschoben, daß sie sich dem Stapel 1 entlang wegschraubt und eine Entnahmelücke von ein bis zwei Dicken des Elements 3 freigibt, so daß dieses Element durch die entstandene Lücke hindurch entnommen werden kann. Die Spindel 8' wird aus Gründen der Knickstabilität beidseitig ihrer Trennstelle durch - beispielsweise drei - Stützwalzen 33 zusätzlich gelagert.

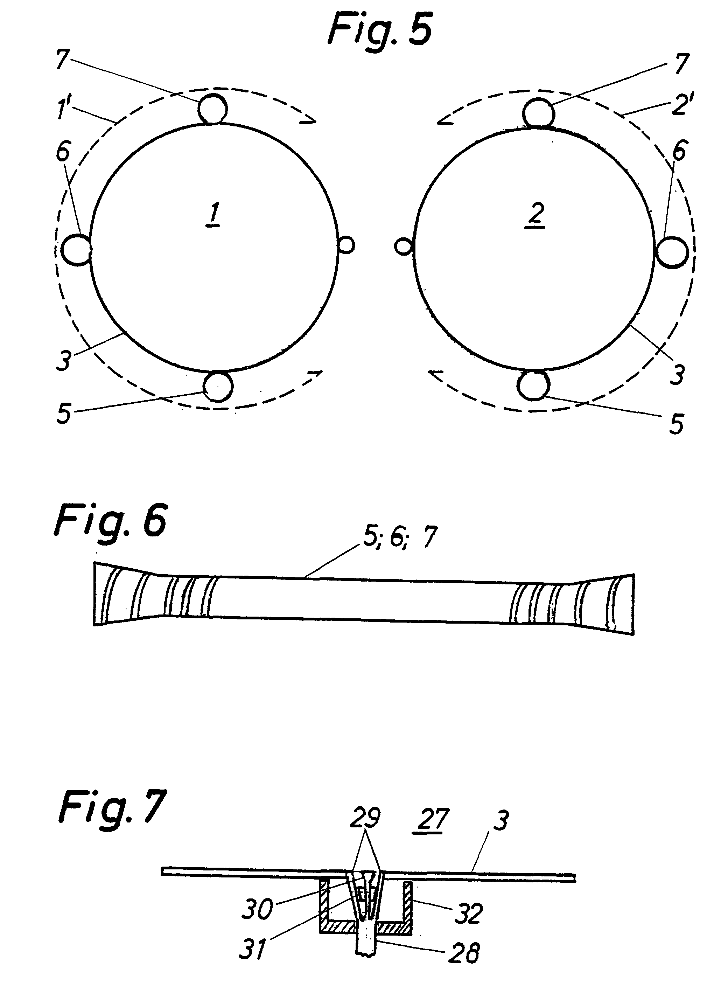

In den Fig. 5 bis 7 sei nun noch ein Ausführungsbeispiel mitzwei nebeneinander angeordneten und zueinander parallelen Stapeln 1 und 2 bzw. ihren zugehörigen Magazinen 1' und 2' dargestellt und beschrieben. Jeder dieser Stapel besitzt mindestens drei über seinen Umfang in ganz bestimmter Weise verteilte und parallel zur Stapelachse angeordnete Gewindespindeln 5, 6 und 7. Für den in Blickrichtung linken Stapel der Fig. 5 bedeutet dies, daß die Spindeln unter 0°, 90° und 180° angeordnet sind, während sie dann bei dem in Blickrichtung rechten Stapel unter 180°, 270° und 360° angeordnet sein müssen. Auf diese Weise ergibt es sich, daß die offenen (d.h. nicht durch eine Gewindespindel begrenzten) Seiten der beiden Stapel einander exakt gegenüberliegen, was für einen einfachen, linearen Wegverlauf beim Austausch der scheibenförmigen Elemente 3 zwingend ist. Dabei ist es entsprechend dem vorausgehenden Ausführungsbeispiel auch hier erforderlich, daß die Gewindespindeln jedes einzelnen Stapels synchron bewegt werden.

Aus Fig. 6 ist die Ausbildung der Gewindespindeln 5 bis 7 bei der Zweistapelausführung ersichtlich. Auch hier verläuft ihre Steigung nicht gleichförmig. Im Gegensatz zu dem vorausgehenden Ausführungsbeispiel ist dieselbe jedoch nicht im Mittelbereich der Gewindespindeln, sondern nach deren Enden hin verlagert bzw. in diesen Endbereichen kontinuierlich erweitert ausgebildet. Auch die Ganghöhe ist in diesen Bereichen - der veränderten Steigung angepaßt - erweitert ausgebildet. Im Mittelbereich besteht gleichförm. Steigung.

Fig. 7 zeigt schließlich noch die konstruktive Ausgestaltung und die Funktion des zugehörigen Manipulators 27, der von dem Manipulator 26 des vorbeschriebenen Ausführungsbeispiels ebenfalls abweicht. Im anstehenden Fall besteht er im wesentlichen aus einer Außenspannzange 28, die mit sich trichterförmig weitenden Fingern 29 am freien Ende der Zange in das Mittelloch 4 des scheibenförmigen Elements 3 greift. Innerhalb der durch die Finger gebildeten Trichteröffnung gleitet entlang eines zentrisch angeordneten Dorns 30 der dem Trichter angepaßte keilförmige Stempel 31. Je weiter letzterer in den Trichter eindringt, um so stärker die Spreizung und um so sicherer die kraftschlüssige Verbindung zwischen Außenspannzange 28 und scheibenförmigem Element 3. Mit ihrem Schaft steckt die Zange in der Zentrierglocke 32, die mit ihrem Glockenrand beim Eintauchen der Finger in das Mittelloch auf dem scheibenförmigen Element plan aufsitzt. Abschließend wirddas Element, wie bei der einstapeligen Ausführung dargelegt, in der Ebene dieses Elements aus dem Stapel 1 heraus- und in den Stapel 2, entlang der Verbindungslinie beider Stapelachsen, hineingeschoben.

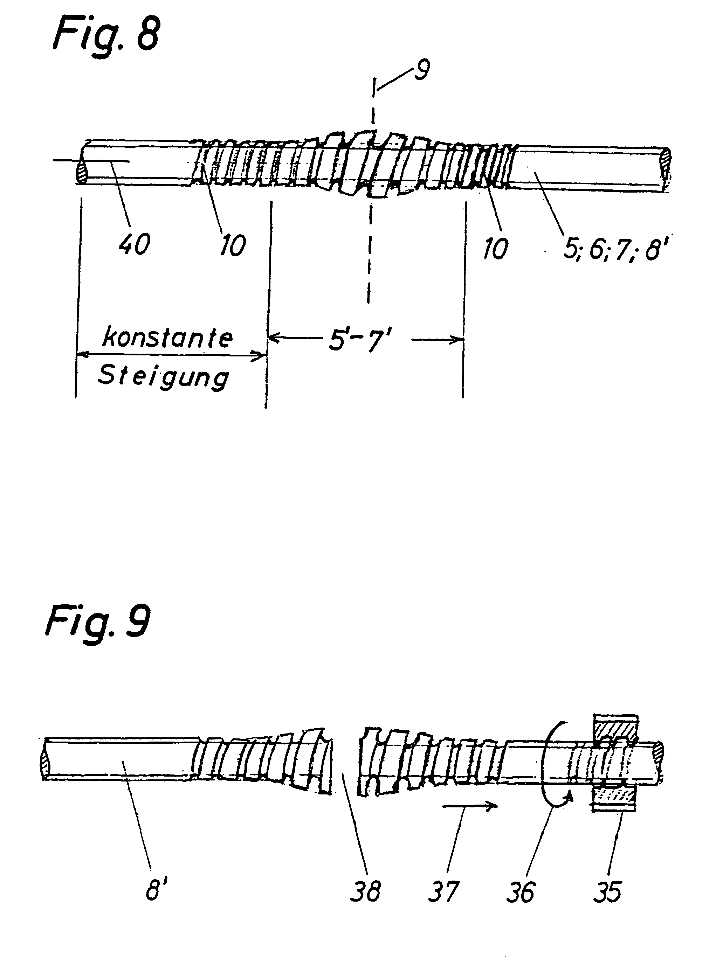

Wegen der Bedeutung, die der Gewindespindelausbildung im anstehenden Zusammenhang zukommt,und aus Gründen einer besseren Verdeutlichung sei an Hand von Fig. 8 nochmals auf die in Fig. 2 bereits für die einstapelige Ausführungsform angedeutete spezielle Ausgestaltung des Mittenbereichs 5'-7' näher eingegangen, was bei der zweistapeligen Ausführungsform den Endbereichen der Fig. 6 entspricht. Für eine bessere Entnahme des scheibenförmigen Elements 3 hat die Spindel der Fig. 8 im Mittenbereich eine deutlich erhöhte Steigung (10) und einen sich nach dem Mittenbereich gleichfalls zunehmend erhöhenden Spitzendurchmesser. Die Außenbereiche dagegen besitzen eine konstante Steigung, während der Innendurchmesser durchgehend konstant sein muß.

In Fig. 9 schließlich ist die Teilbarkeit der Gewindespindel 8' an der in Fig. 8 durch eine strichlierte vertikale Linie 9 angedeuteten Stelle aufgezeigt. Zu diesem Zweck ist auf der in Blickrichtung rechten Spindelseite die Führungsmutter 35 angeordnet. Zum Entnehmen und Füllen wird diese Hälfte im Sinn des Drehpfeils 36 um eine Umdrehung gedreht. Dabei verschiebt sich die Spindelhälfte gemäß dem Richtungspfeil 37, so daß sich im Mittenbereich die dargestellte öffnung 38 bildet. Beim öffnungsund Schließvorgang steht die Mutter 35 fest. Nur wenn sich der ganze Stapel bewegt, dreht sie sich synchron mit; sobald ein Element 3 entnommen wird, wird sie festgehalten.

Im folgenden seien noch die für die einzelnen Bewegungsabläufe erforderlichen Antriebsmittel aufgelistet: Bei der zweistapeligen Ausführungsform ist pro Stapel 1 bzw. 2 je ein handelsüblicher und deshalb in der Zeichnung nicht dargestellter Motor erforderlich, der den Stapel entlang seiner Längsachse bewegt. Ferner ist bei der einstapeligen Ausführungsform für die in ihrer Mitte trennbare Haltestange 8 bzw. Gewindespindel 8' ein gleichfalls handelsüblicher und deshalb nicht dargestellter Motor vorgesehen. Sodann der Motor oder Drehmagnet 41, der den Finger 12 (Fig. 3) bewegt, um dadurch das scheibenförmige Element 3 ein erstes Stück aus dem Stapel hinauszuschieben; der bereits erwähnte Hub- oder Kippantrieb 20 für das Absenken des Greifarms 16 in das Mittelloch 4 und schließlich der gleichfalls schon erwähnte Drehantrieb 23, der den Greiferarm in Scheibenebene verschwenkt und dadurch das scheibenförmige Element einem Laufwerk oder dgl. zuführt.

Den in den vorbeschriebenen Ausführungsbeispielen angegebenen Winkelgraden, Stückzahlen von Gewindespindeln,Haltestangen und scheibenförmigen oder auch den zu berücksichtigenden Toleranzangaben für die Länge und Stärke dieser Elemente sowie der Ausbildung der diversen Finger, Spannzangen und Zentrierelemente kann nur beispielhafte Bedeutung beigemessen werden. Bei anderen, nicht speziell erwähnten und/oder dargestellten Ausführungsbeispielen können sich dieserhalb Änderungen ergeben, ohne daß dadurch der vorgeschlagene Rahmen verlassen würde.

## Patentansprüche

1. Vorrichtung zum Magazinieren und Transportieren von gleichgroßen, stapelförmig angeordneten Scheiben (3) mit Mittelloch (4) - z.B. Cds sowie Wechselfest- oder magnetooptische Platten - und mit mindestens einem Plattenstapel (1) samt Magazin (1'), innerhalb dessen um den Umfang der Scheiben zueinander parallel, in einem Winkelbogen von 0 bis 180° und vorzugsweise symmetrisch Gewindespindeln (5-7; 8') und gegebenenfalls eine Haltestange (8) angeordnet sind, die sich über die gesamte Länge des Stapels (1) erstrecken, die synchron angetrieben werden, in deren Gewindegängen die Scheiben über deren Ränder lose gehaltert sind und die sich bei rotierenden Gewindespindeln so lange entlang der Stapelachse bewegen, bis sie in einer gewünschten Stellung angekommen sind, in der sie von einem Manipulator (26) entnommen und an ihren Bestimmungsort transportiert werden, **dadurch gekennzeichnet, daß**
a) bei einstapeliger Ausführung die Gewindespindeln (5-7; 8') im Zentralbereich (9) eine erhöhte Gewindetiefe mit oder ohnehin an sich bekannter Weise erhöhte(r) Gewindesteigung jeweils bei konstantem Kerndurchmesser aufweisen und
b) bei einer mehrstapeligen Ausführung umgekehrt die Steigung der Gewindespindeln (5-7; 8') im Ein- und Auslaufbereich (10) sowie die Gewindetiefe bei konstantem Kerndurchmesser größer ausgebildet sind als im Zentralbereich (9) und
c) in allen Fällen der Spitzendurchmesser der Gewindespindeln (5-7; 8') der Gewindesteigung angepaßt ist.

2. Vorrichtung nach Patentanspruch 1, **dadurch gekennzeichnet**, d a ß bei Verwendung von zwei Stapeln (1; 2) bzw. Magazinen (1'; 2') deren offene Seiten einander exakt gegenüberliegend angeordnet sind.

3. Vorrichtung nach Patentanspruch 1 und 2, **dadurch gekennzeichnet, daß** die Gewindespindel (8') oder die Haltestange (8) in etwa hälftig teilbar ausgebildet ist, wobei nur deren eine Hälfte synchron und zusammen mit den übrigen Gewindespindeln (5-7) antreibbar ist, während die andere Hälfte der Spindel bzw. Stange beim Suchtakt synchron und beim An- und Ausstoßtakt asynchron zu den übrigen Gewindespindeln dreht und Positionsfühler die entsprechenden Haltekommandos überwachen.

4. Vorrichtung nach Anspruch 3, **dadurch gekennzeichnet, daß** die Haltestange (8) oder die weitere Gewindespindel (8') an der Trennstelle jeweils mit einem Zentrierkonus versehen ist und die für die asynchrone Dehbewegung vorgesehene Stangen- oder Spindelhälfte mit Hilfe eines Hubmechanismus' in Richtung ihres Achsenverlaufs verschiebbar ausgebildet ist.

5. Vorrichtung nach Anspruch 3 und/oder 4, **dadurch gekennzeichnet, daß** die Haltestange (8) bzw. die weitere Gewindespindel (8') beidseitig ihrer Trennstelle in z.B. drei zu ihnen und unter sich parallelen Stützwalzen (33) zusätzlich gelagert sind.

6. Vorrichtung nach einem der vorausgehenden Ansprüche, **dadurch gekennzeichnet, daß** bei der zweistapeligen Version die Steigung der Gewindespindeln (5-7 und 8') im Zentralbereich (9) zwischen 140% und 180% sowie im Ein- und Auslaufbereich in etwa zwischen 180% und 350% der Nettostärke des scheibenförmigen Elements (3) beträgt (gemessen am Rand, bei nicht streng zylindrischer Form z.B. einer CD), während bei der einstapeligen Version entsprechend umgekehrte Zahlenverhältnisse vorliegen.

7. Vorrichtung nach einem der vorausgehenden Ansprüche, **dadurch gekennzeichnet, daß** die Gewindespindeln (5-7 und 8') eine gegenüber der Anzahl der scheibenförmigen Elemente (3) höhere, vorzugsweise doppelt so hohe Anzahl an Gewindegängen aufweisen.

8. Vorrichtung nach einem der vorausgehenden Ansprüche, **dadurch gekennzeichnet, daß** der Manipulator (26) für die einstapelige Ausführung im wesentlichen aus einem ersten Finger (12) besteht, der das selektierte scheibenförmige Element (3) z.B. im Uhrzeigersinn (14) und entlang zweier Führungsschienen (15; 16) so weit aus seiner Stapellage verschiebt, daß das Mittelloch (4) über den Rand des Stapels hinausreicht; ferner aus einem zweiten, z.B. im Gegenuhrzeigersinn verschwenkbaren Finger (13) als Gegenlager für das verschobene Element sowie aus einem Greiferarm (16), der mit seinem freien Ende das scheibenförmige Element über sein Mittelloch (4) aus dem Stapelbereich vollends herausbefördert.

9. Vorrichtung nach Anspruch 8, **dadurch gekennzeichnet, daß** der erste Finger (12) auf einer zu Gewindespindeln (5, 6, 7, 8') und Haltestange (8) parallelen Achse (22) außerhalb des Stapels (1) gelagert ist sowie in seiner Länge und gebogenen Form etwa einem knappen Viertel des Außenumfangs des scheibenförmigen Elements (3) entspricht.

10. Vorrichtung nach Anspruch 8 und 9, **dadurch gekennzeichnet, daß** der Greiferarm (16) einmal auf einer zu den Gewindespindeln (5, 6, 7, 8') und der Haltestange (8) um 90° verdrehten Hub- oder Kippachse (20) senkrecht zur Scheibenebene und zum anderen über einen Drehantrieb (23) sowie dessen Achse (24) in der Scheibenebene selbst verschwenkbar ausgebildet ist.

11. Vorrichtung nach Anspruch 10, **dadurch gekennzeichnet, daß** der Greiferarm (16) an seinem freien Ende federnde Finger oder einen aufblasbaren Stempel (19) aufweist, die über die Hub- oder Kippachse (20) in das Mittelloch (4) des scheibenförmigen Elements (3) eingreifen und dort durch Spreizen bzw. Aufblasen eine kraftschlüssige Verbindung zwischen Greiferarm und Element bewirkt.

12. Vorrichtung nach einem der vorausgehenden Ansprüche 1 bis 7, **dadurch gekennzeichnet, daß** der Manipulator (27) für die zweistapelige Ausführung schlittenförmig ausgebildet und mit dem. Greiferarm (16) versehen ist; der Schlitten sich auf einer linearen, ideellen Verbindungslinie der Zentren der beiden Stapel (1; 2) bewegt und hierbei dessen Greiferarm das scheibenförmige Element (3) an seinem Mittelloch (4) erfassend in der Ebene des Elements von einem Stapel zum anderen befördert.

13. Vorrichtung nach Anspruch 12, **dadurch gekennzeichnet, daß** der Schlitten aus einer Außenspannzange (28) mit an ihrem freien Ende trichterförmig geweiteten Fingern (29) besteht, wobei innerhalb des Trichters auf einem zentrischen Dorn (30) ein der Trichterform angepaßter, keilförmiger Stempel (31) verschiebbar angeordnet ist, der bei in das Mittelloch (4) eines scheibenförmigen Elements (3) eingeführten Fingern eine kraftschlüssige Verbindung zwischen Fingern und Element bewirkt.

14. Vorrichtung nach Anspruch 13, **dadurch gekennzeichnet, daß** der Schaft der Außenspannzange (28) in einer Zentrierglocke (32) gehaltert ist, deren Rand bei in das Mittelloch (4) eingetauchten Fingern (29) auf dem scheibenförmigen Element (3) aufsitzt.

## Claims

1. Device for storing and transporting stacked discs (3) of uniform size with a centre hole (4) - e.g. CDs and alternating stress-resistant or magnetooptical discs - and with at least one disc stack (1) together with magazine (1'), inside which threaded spindles (5-7; 8') and optionally a holding rod (8) are arranged parallel to one another about the circumference of the discs in an arc of an angle of 0 to 180° and preferably symmetrically, these extending over the entire length of the stack (1), being driven synchronously, loosely retaining the discs by way of the edges thereof in their thread turns and, when the threaded spindles rotate, moving along the stack axis until they reach a desired position, in which they are removed by a manipulator (26) and transported to their destination, **characterised in that**,
a) in the case of a single-stack arrangement, in the central region (9) the threaded spindles (5-7; 8') have an increased thread depth, with or without a thread pitch increased in a manner known per se, in each case with a constant core diameter and
b) in the case of a multi-stack arrangement, in the run-in and run-out region (10) the pitch of the threaded spindles (5-7; 8') and, with a constant core diameter, the thread depth are conversely greater than in the central region (9) and
c) the major diameter of the threaded spindles (5-7; 8') is in all cases adapted to the thread pitch.

2. Device according to Claim 1, **characterised in that**, when using two stacks (1; 2) or magazines (1'; 2'), the open sides thereof are arranged exactly opposite one another.

3. Device according to Claims 1 and 2, **characterised in that** the threaded spindle (8') or the holding rod (8) is formed such that it can be divided approximately in half, wherein just one half thereof can be driven synchronously and together with the other threaded spindles (5-7), while the other half of the spindle or rod rotates synchronously with the other threaded spindles in the search phase and asynchronously with these in the contacting and ejection phase, and position sensors supervise the corresponding stop commands.

4. Device according to Claim 3, **characterised in that** the holding rod (8) or the other holding spindle (8') is in each case provided at the dividing point with a centring cone, and the rod or spindle half which is intended for the asynchronous rotational movement is formed such that it can be displaced by means of a lifting mechanism in the direction of its axial extent.

5. Device according to Claim 3 and/or 4, **characterised in that** the holding rod (8) and the other holding spindle (8') are additionally mounted on both sides of their dividing point in, e.g. three support rolls (33), which are parallel therewith and with one another.

6. Device according to any one of the preceding Claims, **characterised in that**, in the case of the double-stack version, the pitch of the threaded spindles (5-7 and 8') in the central region (9) is between 140% and 180% and in the run-in and run-out region approximately between 18.0% and 350% of the net thickness of the disc-shaped element (3) (measured at the edge, with a shape which is not strictly cylindrical, e.g. of a CD), while reversed numerical ratios accordingly apply to the single-stack version.

7. Device according to any one of the preceding Claims, **characterised in that** the threaded spindles (5-7 and 8') have a higher, preferably twice as high number of thread turns when compared with the number of disc-shaped elements (3).

8. Device according to any one of the preceding Claims, **characterised in that** the manipulator (26) for the single-stack arrangement consists essentially of a first finger (12), which displaces the selected disc-shaped element (3), e.g. clockwise (14) and along two guide rails (15; 16), out of its stacked position to an extent such that the centre hole (4) reaches beyond the edge of the stack; also of a second finger (13), which is, e.g. pivotable anticlockwise, as counterbearing for the displaced element, and of a gripper arm (16), which conveys the disc-shaped element with its free end by way of the centre hole (4) of the element completely out of the stack region.

9. Device according to Claim 8, **characterised in that** the first finger (12) is mounted on a shaft (22), which is parallel to the threaded spindles (5, 6, 7, 8') and holding rod (8), outside of the stack (1), and corresponds in terms of its length and curved shape approximately to just one quarter of the outer circumference of the disc-shaped element (3).

10. Device according to Claims 8 and 9, **characterised in that** the gripper arm (16) is formed so as to be pivotable on the one hand on a lifting or tilting shaft (20), which is turned through 90° with respect to the threaded spindles (5, 6, 7, 8'), perpendicularly to the disc plane and on the other in the actual disc plane by way of a rotary drive (23) and the shaft (24) thereof.

11. Device according to Claim 10, **characterised in that** the gripper arm (16) comprises at its free end resilient fingers or an inflatable plunger (19), which engage by way of the lifting or tilting shaft (20) in the centre hole (4) of the disc-shaped element (3) and here effect a non-positive connection between the gripper arm and the element through spreading or inflation.

12. Device according to any one of the preceding Claims 1 to 7, **characterised in that** the manipulator (27) for the double-stack arrangement is in the form of a slide and provided with the gripper arm (16); the slide moves along a linear, ideal connecting line between the centres of the two stacks (1; 2) and in the process its gripper arm - gripping the disc-shaped element (3) at its centre hole (4) - conveys this element in the plane of the latter from one stack to the other.

13. Device according to Claim 12, **characterised in that** the slide consists of outer tongs (28) with fingers (29) widened in the shape of a funnel at their free end, wherein a wedge-shaped plunger (31), which is adapted to the funnel shape, is arranged so as to be displaceable inside the funnel on a central mandrel (30) and effects a non-positive connection between the fingers and the element when the fingers are inserted in the centre hole (4) of a disc-shaped element (3).

14. Device according to Claim 13, **characterised in that** the shank of the outer tongs (28) is retained in a centring bell (32), the edge of which is seated on the disc-shaped element (3) when the fingers (29) have moved into the centre hole (4).

## Revendications

1. Dispositif de magasinage et de transport de disques de mêmes dimensions disposés en forme de pile (3) avec un trou central (4) -par exemple des CD ainsi que des disques effaçables et réenregistrables ou des disques magnéto-optiques- et avec au moins une pile de disques (1), y compris le magasin (1'), à l'intérieur duquel, autour de la périphérie des disques, sont disposées des tiges filetées (5 à 7 ; 8') parallèles les unes aux autres, formant un angle de 0 à 180° et de préférence symétriques et, le cas échéant, une barre de retenue (8), qui s'étendent sur la longueur totale de la pile (1), qui sont actionnées de manière synchrone, dans les spires desquelles les disques sont maintenus de manière amovible par leurs bords et qui se déplacent le long de l'axe de la pile, lors de la rotation des tiges filetées, jusqu'à ce qu'elles parviennent dans une position souhaitée dans laquelle elles sont dégagées d'un bras manipulateur (26) et transportées au niveau de leur emplacement de destination, **caractérisé en ce que**
a) dans le mode de réalisation à une pile, les tiges filetées (5 à 7 ; 8') présentent dans la zone centrale (9) une profondeur de filetage supérieure avec ou sans, de manière connue en soi, filetage supérieur, dans chaque cas avec un diamètre à fond de filet constant et
b) dans un mode de réalisation à plusieurs piles, en revanche, le pas des tiges filetées (5 à 7 ; 8') dans la zone d'entrée et de sortie (10) ainsi que la profondeur de filetage, pour un diamètre à fond de filet constant, est conçu comme étant supérieur à celui de la zone centrale (9) et
c) dans tous les cas, le diamètre maximum des tiges filetées (5 à 7 ; 8') est adapté au pas de filetage.

2. Dispositif selon la revendication 1, **caractérisé par** l'utilisation de deux piles (1 ; 2) ou magasins (1' ; 2') dont les côtés ouverts sont exactement face à face.

3. Dispositif selon la revendication 1 et 2, **caractérisé en ce que** la tige filetée (8') ou la barre de retenue (8) est conçue de manière à pouvoir être divisée en environ deux moitiés, moyennant quoi, parmi ces deux moitiés, seule une moitié peut être actionnée de manière synchrone et simultanément avec les autres tiges filetées (5 à 7), alors que l'autre moitié des tiges ou des barres, à la cadence de recherche, tourne de manière synchrone et, à la cadence d'enclenchement et à la cadence de dégagement, tourne de manière asynchrone par rapport aux outres tiges filetées et les détecteurs de position contrôlent les commandes de blocage correspondantes.

4. Dispositif selon la revendication 3, **caractérisé en ce que** la barre de retenue (8) ou les autres tiges filetées (8') au niveau du point de jonction, est respectivement dotée d'un cône de centrage et la moitié des barres ou tiges prévues pour le mouvement rotatif asynchrone est conçue de manière à pouvoir être déplacée dans la direction de leur axe à l'aide d'un mécanisme de levage.

5. Dispositif selon la revendication 3 et/ou 4, **caractérisé en ce que** la barre de retenue (8) ou les autres tiges filetées (8'), des deux côtés de leur point de jonction, sont en outre disposées dans, par exemple, trois rouleaux de support (33) qui sont parallèles les uns aux autres, et qui leur sont parallèles.

6. Dispositif selon l'une quelconque des revendications précédentes, **caractérisé en ce que**, dans la version à deux piles, le pas des tiges filetées (5 à 7 et 8') dans la zone centrale (9) vaut entre 140 % et 180 % et, dans la zone d'entrée et dans la zone de sortie, entre 180 % et 350 % de la force nette de l'élément en forme de disque (3) (en mesurant au bord, dans le cas d'une forme qui n'est pas rigoureusement cylindrique, par exemple d'un CD), tandis que dans une version à une pile, on obtient les proportions inverses.

7. Dispositif selon l'une quelconque des revendications précédentes, **caractérisé en ce que** les tiges filetées (5 à 7 et 8') présentent un nombre de spires qui est supérieur, de préférence double par rapport au nombre des éléments en forme de disque (3).

8. Dispositif selon l'une quelconque des revendications précédentes, **caractérisé en ce que** le bras manipulateur (26), pour le mode de réalisation à une pile, est essentiellement constitué d'un premier doigt (12) qui déplace l'élément en forme de disque (3) choisi, par exemple dans le sens des aiguilles d'une montre et le long de deux rails de guidage (15 ; 16), assez loin, en partant de sa position dans la pile, pour que le trou central (4) dépasse du bord de la pile ; il présente en outre un deuxième doigt pouvant, par exemple, tourner dans le sens inverse des aiguilles d'une montre (13) servant de butée pour l'élément déplacé ainsi qu'un bras de préhension (16), qui, avec son extrémité libre, dégage totalement l'élément en forme de disque de la zone de la pile par l'intermédiaire de son trou central (4).

9. Dispositif selon la revendication 8, **caractérisé en ce que** le premier doigt (12) est disposé en dehors de la pile (1) sur un axe (22) parallèle aux tiges filetées (5, 6, 7, 8') et à la barre de retenue (8) et correspond, du point de vue de la longueur et de la forme recourbée, à environ quasiment un quart de la périphérie extérieure de l'élément en forme de disque (3).

10. Dispositif selon la revendication 8 et 9, **caractérisé en ce que** le bras de préhension (16) est conçu d'une part sur un axe de levage ou d'inclinaison (20) qui a tourné de 90 ° par rapport aux tiges filetées (5, 6, 7, 8') et à la barre de retenue (8), verticalement par rapport au niveau du disque et d'autre part, **en ce qu'**il est conçu de manière à pouvoir tourner sur lui-même ainsi que son axe (24) à l'aide d'un entraînement en rotation (23).

11. Dispositif selon la revendication 10, **caractérisé en ce que** le bras de préhension (16), à son extrémité libre, présente des doigts à ressort ou un piston (19) expansible, qui peut venir en prise, à l'aide du bras de levage ou d'inclinaison (20) dans le trou central (4) de l'élément en forme de disque (3) et, à ce niveau, par élargissement ou gonflement, entraîne une liaison par adhérence entre le bras de préhension et l'élément.

12. Dispositif selon l'une quelconque des revendications précédentes 1 à 7, **caractérisé en ce que** le bras manipulateur (27) pour le mode de réalisation à deux piles est conçu en forme de coulisseau et est doté du bras de préhension (16); le coulisseau se déplace sur une ligne de liaison linéaire, imaginaire reliant les centres des deux piles (1 ; 2) et à ce stade, son bras de préhension transfère, d'une pile à l'autre, l'élément en forme de disque (3) en le prenant par son trou central (4) dans le plan de l'élément.

13. Dispositif selon la revendication 12, **caractérisé en ce que** le coulisseau est constitué d'une pince de serrage vers l'extérieur (28) ayant, à son extrémité libre, des doigts élargis en forme d'entonnoir (29), moyennant quoi, à l'intérieur de l'entonnoir, sur une cheville centrale, un piston (31) cunéiforme adapté est disposé de manière mobile, lequel provoque, entre les doigts et l'élément, une liaison par adhérence au niveau des doigts introduits dans le trou central (4) de l'élément en forme de disque (3).

14. Dispositif selon la revendication 13, **caractérisé en ce que** le corps de la pince de serrage vers l'extérieur (28) est maintenu dans une cloche de centrage (32), dont le bord repose, au niveau des doigts (29) enfoncés dans le trou central (4), sur l'élément en forme de disque.
